(19) Europäisches Patentamt
European Patent Office
Office européen des brevets

(11) **EP 2 771 421 B1**

(12) **EUROPÄISCHE PATENTSCHRIFT**

(45) Veröffentlichungstag und Bekanntmachung des Hinweises auf die Patenterteilung:
**15.02.2017 Patentblatt 2017/07**

(21) Anmeldenummer: **12778296.9**

(22) Anmeldetag: **19.10.2012**

(51) Int Cl.:
*C09J 7/02* (2006.01)     *C08K 7/00* (2006.01)
*C08K 7/02* (2006.01)     *C08L 1/02* (2006.01)
*C09J 107/00* (2006.01)   *C08K 11/00* (2006.01)

(86) Internationale Anmeldenummer:
**PCT/EP2012/070755**

(87) Internationale Veröffentlichungsnummer:
**WO 2013/060624 (02.05.2013 Gazette 2013/18)**

(54) **BIOBASIERTE NATURKAUTSCHUKMASSE UND DEREN VERWENDUNG**

BIO-BASED NATURAL RUBBER COMPOSITIONS AND THEIR USE

COMPOSITIONS DE CAOUTCHOUC NATUREL A BASE BIOLOGIQUE ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2011 DE 102011085223**

(43) Veröffentlichungstag der Anmeldung:
**03.09.2014 Patentblatt 2014/36**

(73) Patentinhaber: **tesa SE**
**22848 Norderstedt (DE)**

(72) Erfinder:
• **KÖPKE, Tillmann**
**77948 Friesenheim (DE)**
• **SCHWARZBACH, Julia**
**22529 Hamburg (DE)**
• **SANDOZ, Guillaume**
**69570 Dardilly (FR)**

(56) Entgegenhaltungen:
EP-A1- 0 084 220     EP-A1- 1 832 637
WO-A1-01/32796     WO-A1-03/011260
WO-A1-2006/125995     WO-A1-2009/090119

• **BOWEN P: "Particle Size Distribution Measurement from Millimeters to Nanometers and from Rods to Platelets", JOURNAL OF DISPERSION SCIENCE AND TECHNOLOGY, TAYLOR AND FRANCIS GROUP, NEW YORK, NY, US, Bd. 23, Nr. 5, 1. Januar 2002 (2002-01-01) , Seiten 631-662, XP009102859, ISSN: 0193-2691, DOI: 10.1081/DIS-120015368**
• **CLEMONS AND D F CAUFIELD C M: "WOOD FLOUR", FUNCTIONAL FILLERS FOR PLASTICS, WILEY-VCH VERLAG, WEINHEIM, DE, 1. Januar 2005 (2005-01-01), Seiten 249-269, XP002436553,**

**Beschreibung**

Die Erfindung betrifft die Verwendung einer biobasierten Naturkautschukmasse.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebeänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.
Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Aufgrund von ökologischen Gesichtspunkten, Nachhaltigkeit und vor dem Hintergrund der immer knapper werdenden Ressourcen an Erdöl und auf der anderen Seite eines weltweit stark wachsenden Verbrauches an Kunststoffen gibt es seit einigen Jahren die Bestrebung, Kunststoffe auf Basis von nachwachsenden Rohstoffen herzustellen. Dies gilt insbesondere für biologisch abbaubare Polymere, die in Verpackungsanwendungen oder Folienanwendungen Verwendung finden sollen. Auch für medizinische Anwendungen spielen biologisch abbaubare Produkte eine zunehmend wichtige Rolle. Einige biobasierte beziehungsweise bioabbaubare Kunststoffe sind heute kommerziell verfügbar.
Biobasiert heißt, hergestellt aus nachwachsenden Rohstoffen. Bioabbaubare Polymere ist eine Bezeichnung für natürliche und synthetische Polymere, die Kunststoff ähnliche Eigenschaften (Kerbschlagzähigkeit, Thermoplastifizierbarkeit) aufweisen, aber im Gegensatz zu konventionellen Kunststoffen von einer Vielzahl von Mikroorganismen in biologisch aktiver Umgebung (Kompost, Faulschlamm, Erde, Abwasser) abgebaut werden; dies passiert nicht notwendigerweise unter üblichen Haushaltsbedingungen (Kompostierung im Garten). Eine Definition der Bioabbaubarkeit findet sich in den Europäischen Normen DIN EN 13432 (biologischer Abbau von Verpackungen) und DIN EN 14995 (Kompostierbarkeit von Kunststoffen).

Naturkautschuk ist - wie der Name schon andeutet - ein biobasierendes, elastisches Polymer, das auf Pflanzenprodukte wie vor allem Milchsaft (Latex) zurückgeht. Naturkautschuk wird als ein wesentlicher Rohstoff zu Klebmassen verarbeitet, den so genannten Naturkautschukklebemassen.

Zur Einstellung anwendungsgerechter Eigenschaften können Haftklebemassen durch Zumischen von Klebharzen, Weichmacher, Vernetzern oder Füllstoffen modifiziert werden.

Füllstoffe werden beispielsweise zur Steigerung der Kohäsion einer Haftklebemasse eingesetzt. Dabei führt häufig eine Kombination aus Füllstoff/Füllstoff-Wechselwirkungen und Füllstoff/Polymer-Wechselwirkungen zu der gewünschten Verstärkung der Polymermatrix.

Füllstoffe werden auch zur Gewichts- beziehungsweise Volumenerhöhung in Papier, Kunststoffe, sowie Kleb- und Anstrichstoffe und andere Produkte beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe, wie Calciumcarbonat, Kaolin, Talkum, Dolomit und dergleichen werden mechanisch hergestellt.

Auch bei Kautschuk und synthetischen Elastomeren kann man durch geeignete Füllstoffe die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße.

Man kann anorganische und organische Füllstoffe auch nach ihrer Dichte unterscheiden. So erhöhen die oft in Kunststoffen und auch Klebemassen verwendeten anorgansichen Füllstoffe wie Kreide, Titandioxid, Calcium- und Bariumsulfat die Dichte des Composits, da sie selber eine Dichte aufweisen, die höher ist als die des Polymeren. Bei gleicher Schichtdicke ist das Flächengewicht dann höher.
Daneben gibt es Füllstoffe, die die Gesamtdichte des Composits reduzieren können. Hierzu zählen Mikrohohlkugel, sehr voluminöse Leichtfüllstoffe. Die Kugeln sind mit Luft, Stickstoff oder Kohlendioxid gefüllt, die Kugelschalen bestehen aus Glas, bei einigen Produkten auch aus einem Thermoplasten.

Aufgrund der Tatsache, dass ökologische Aspekte, die die Biobasiertheit betreffen, auch für Haftklebebänder eine immer wichtigere Rolle spielen, ist der Fachmann auf der Suche nach Klebemassen, deren einzelne Bestandteile möglichst biobasiert sind. Dabei ist es aber von sehr hoher Bedeutung, dass die Eigenschaften der Klebemassen beziehungsweise der damit hergestellten Klebebänder gegenüber den verfügbaren, biologisch bedenklicheren Klebemassen beziehungsweise Klebebänder nicht abfallen. Dies gilt insbesondere auch für Naturkautschuk basierende Klebemassen, die aufgrund des vorhandenen Kautschuks auf jeden Fall einen hohen Anteil Biobasiertheit aufweisen.

Eigenschaftsprofil von üblichen Haftklebstoffen zeigen und die zu möglichst großen Anteilen biobasiert sind.

Gelöst wird diese Aufgabe durch die Verwendung einer Haftklebemasse in einem ein- oder beidseitig klebenden Klebeband, wie sie im Hauptanspruch niedergelegt ist. Gegenstand der Unteransprüche sind vorteilhafte Fortbildungen des Erfindungsgegenstandes.

Demgemäß betrifft die Erfindung Verwendung einer Klebemasse in einem ein- oder beidseitig klebenden Klebeband, die zu mindestens 95 Gew.-%, vorzugsweise 98 Gew.-% biobasiert ist, enthaltend als Basispolymer Naturkautschuk sowie Klebharze aus biobasierten Rohstoffen, wobei der Anteil der Klebharze bei 80 bis 120 phr liegt, sowie zumindest einen biobasierten in dem Basispolymer oder den Klebharzen unlöslichen und nicht mit dem Basispolymer oder den Klebharzen vernetzenden mikropartikulären Zusatzstoff in Form von Partikeln, der ein Schüttgewicht von mindestens 200 g/l hat und bei dem mindestens 65 %, vorzugsweise 90 bis 95 % der Partikel einen Partikeldurchmesser von weniger als 32 $\mu$m aufweisen, wobei der Anteil des Zusatzstoffs bezogen auf die gesamte Haftklebemasse zwischen größer 0 Gew.-% und bis zu 20 Gew.-% liegt, wobei als Zusatzstoff pflanzliche und/oder tierische Rohstoffe eingesetzt werden.

Die im Folgenden gemachten Angaben in phr bedeuten Gewichtsteile der betreffenden Komponente bezogen auf 100 Gewichtsteile aller Polymerkomponenten der Haftklebemasse (fest/fest), also beispielsweise ohne Berücksichtigung der Klebharze. Die Angabe Gew.-% ist stets bezogen auf die Zusammensetzung der gesamten Haftklebemasse.

Weiterhin vorzugsweise können dem Naturkautschuk zur Verbesserung der Verarbeitbarkeit thermoplastische Elastomere wie beispielsweise Synthesekautschuke mit einem Anteil von bis zu 5 Gew.-% zugesetzt werden. Stellvertretend genannt seien an dieser Stelle vor allem die besonders verträglichen Styrol-Isopren-Styrol (SIS)- und Styrol-Butadien-Styrol (SBS)-Typen.

Der Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die

Der Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden.

Vorzugsweise besteht das Basispolymer aus Naturkautschuk, weiter vorzugsweise ist sogar neben Naturkautschuk kein weiteres Polymer in der Haftklebemasse vorhanden. In diesem Fall ist die Haftklebemasse eine Zusammensetzung aus Naturkautschuk, einem oder mehreren Klebharz(en), vorzugsweise Alterungsschutzmittel(n) und Zusatzstoff in den im Hauptanspruch angegebenen Grenzen, was eine bevorzugte Ausführungsform darstellt. Darüber hinaus können zusätzlich die später erläuterten Füllstoffe, Farbstoffe und/oder Alterungsschutzmittel in geringen Mengen gegebenenfalls enthalten sein.

Unter der Bezeichnung "Klebharz", englisch "Tackifier Resins", versteht der Fachmann einen Stoff auf Harzbasis, der die Klebrigkeit erhöht.

Vorzugsweise handelt es sich bei Klebharzen aus biobasierten Rohstoffen um Polyterpenharze auf Basis von $\alpha$-Pinen und/oder ß-Pinen und/oder $\delta$-Limone oder Terpenphenolharze.

Beliebige Kombinationen dieser können eingesetzt werden, um die Eigenschaften der resultierenden Haftklebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Die Gewichtsmenge der Harze beträgt 80 bis 120 phr, bevorzugt 90 bis 100 phr, weiter bevorzugt 100 phr.

Die Naturkautschuk basierenden Haftklebemassen können zur Einstellung von optischen und klebtechnischen Eigenschaften nicht-biobasierte Additive wie Füllstoffe, Farbstoffe oder Alterungsschutzmittel (Antiozonantien, Antioxidantien (primäre und sekundäre), Lichtschutzmittel usw.) enthalten.

Als Additive zur Klebemasse werden typischerweise genutzt:

- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Kalziumcarbonate, Zinkoxide, Titandioxide, Aluminiumoxide oder Aluminiumoxidhydroxide. Es sei nochmals ausdrücklich darauf hingewiesen, dass diese Füllstoffe, auch wenn sie in der Natur vorkommen mögen, erfindungsgemäß nicht zu den biobasierten Füllstoffen zählen.

Die Konzentration der die optischen und klebtechnischen Eigenschaften beeinflussenden Additive liegt bei bis zu 5 Gew.-%.

Erfindungsgemäß dürfen die Anteile sämtlicher zugesetzter Stoffe wie Synthesekautschuke und/oder Elastomere und/oder Füllstoffe und/oder Farbstoffe und/oder Alterungsschutzmittel in der Summe 5 Gew.-%, vorzugsweise 2 Gew.-% nicht übertreffen.

Die aufgezählten Stoffe sind nicht zwingend, die Klebemasse funktioniert auch, ohne dass diese einzeln oder in beliebiger Kombination zugesetzt sind, also ohne Synthesekautschuke und/oder Elastomere und/oder Füllstoffe und/oder Farbstoffe und/oder Alterungsschutzmittel.

Erfindungsgemäß werden bis zu 20 Gew.-% ein oder mehrere biobasierte mikropartikuläre Zusatzstoffe in Form von Partikeln zugesetzt, wobei diese ein Schüttgewicht von mindestens 200 g/l haben und bei denen mindestens 65 % der Partikel einen Partikeldurchmesser von weniger als 32 $\mu$m aufweisen.

Als Partikeldurchmesser wird der Durchmesser im Falle nahezu runder Partikeln, wie beispielsweise kornförmigen Partikeln, beziehungsweise die maximale Länge im Falle länglicher Partikeln, wie beispielsweise Fasern definiert.

Als biobasierte oder organische Füllstoffe können sowohl insbesondere pflanzliche als auch tierische Rohstoffe eingesetzt werden, gegebenenfalls auch in Kombination miteinander. Die organischen Füllstoffe liegen sehr bevorzugt feinverteilt vor, insbesondere in Form von Fasern, Schrot, Staub oder Mehl.

Als pflanzliche organische Füllstoffe werden bevorzugt nachwachsende Rohstoffe (nachwachsende organische Materialien) gewählt, insbesondere Holz, Kork, Hanf, Flachs, Gräser, Schilf, Stroh, Heu, Getreide, Mais, Nüsse oder Bestandteile der vorgenannten Materialien, wie Schalen (zum Beispiel Nussschalen), Kerne, Grannen oder dergleichen. Insbesondere kommen Holzmehle, Korkmehle, Getreidemehle, Maismehle und/oder Kartoffelmehle zum Einsatz, ohne sich durch die Aufzählung in der erfinderischen Lehre unnötig beschränken zu wollen.

Als tierische organische Füllstoffe kommen insbesondere Knochen, Chitin (zum Beispiel Krebspanzer, Insektenpanzer), Haare, Borsten und Horn in vorteilhafter Weise zur Anwendung, insbesondere in feinverteilter (gemahlener) Form.

Bevorzugt ist als Füllstoff ist Cellulosepulver wie Holzmehl.

Besonders bevorzugt werden die folgenden Cellulosepulver erfindungsgemäß eingesetzt:

Cellulosepulver I mit der Korn-/Fasergrößenverteilung (Angaben jeweils in Gew.-%):

- 5 % kleiner 100 $\mu$m, 95 % kleiner 32 $\mu$m (Siebrückstand auf Alpine-Luftstrahlsieb nach DIN EN ISO 8130-1)
- Schüttgewicht 250 g/l
- Kommerzielles erhältliches Beispiel: Cellulosepulver der Type Jelucel HM 30 der Firma JELU-WERK, Josef Ehrler GmbH & Co. KG;

Cellulosepulver II mit der Korn-/Fasergrößenverteilung (Angaben jeweils in Gew.-%):

- Spuren (< 0,1 %) kleiner 200 $\mu$m, 3 % kleiner 150 $\mu$m, 30 % kleiner 100 $\mu$m, circa 67 % kleiner 32 $\mu$m (Siebrückstand auf Alpine-Luftstrahlsieb))
- Schüttgewicht 220 g/l
- Kommerzielles erhältliches Beispiel: Cellulosepulver der Type Jelucel HM 90 der Firma JELU-WERK, Josef Ehrler GmbH & Co. KG;
- Spuren (< 0,1 %) kleiner 200 $\mu$m, 5 % kleiner 150 $\mu$m, 35 % kleiner 100 $\mu$m, circa 60 % kleiner 32 $\mu$m (Siebrückstand auf Alpine-Luftstrahlsieb))
- Schüttgewicht 210 g/l
- Kommerzielles erhältliches Beispiel: Cellulosepulver der Type Jelucel HM 150 der Firma JELU-WERK, Josef Ehrler GmbH & Co. KG;

Der Anteil der organischen Füllstoffe in der Haftklebemasse beträgt vorteilhaft zwischen 5 und 20 Gew.-%, insbesondere zwischen 10 und 20 Gew.-%, ganz besonders 12 und 16 Gew.-%.

Insbesondere vorteilhaft werden solche organischen Füllstoffe eingesetzt, besonders bevorzugt aus der Gruppe der vorgenannten Füllstoffe, deren Schüttgewicht im Bereich von 210 bis 300 g/l, vorzugsweise von 210 bis 250 g/l liegen.

Bevorzugt liegt der Glührückstand der Füllstoffe, insbesondere des Cellulosepulvers, bei 0,3 Gew.-% (bezogen auf das Ausgangsgewicht) und/oder der Trockenverlust bei 5 Gew.-% (wieder bezogen auf das Ausgangsgewicht).

Die Haftklebemasse wird zur Ausrüstung von Trägern zu Klebebändern genutzt. Als Klebebänder im erfindungsgemäßen Sinne sollen dabei alle ein- oder beidseitig mit Klebmasse beschichteten flächigen oder bandförmigen Trägergebilde verstanden werden, also neben klassischen Bändern auch Etiketten, Abschnitte, Stanzlinge (gestanzte mit Klebmasse beschichtete flächige Trägergebilde), zweidimensional ausgedehnte Gebilde (zum Beispiel Folien) und dergleichen, auch Mehrschichtanordnungen. Des Weiteren umfasst der Ausdruck "Klebeband" auch so genannte "Transferklebebänder", das heißt ein Klebeband ohne Träger. Bei einem Transferklebeband ist die Klebmasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebmasse appliziert und dann der zweite Liner entfernt. Das Klebeband kann in festen Längen wie zum Beispiel als Meterware oder aber als Endlosware auf Rollen (archimedische Spirale) zur Verfügung gestellt werden.

Der Masseauftrag (Beschichtungsstärke) der Klebmasse liegt zwischen 10 und 50 g/m², vorzugsweise zwischen 20 und 40 g/m², besonders vorzugsweise zwischen 30 und 35 g/m².

Als Trägermaterialien für das Haftklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Besonders bevorzugt werden Trägermaterialien aus nachwachsenden Rohstoffen wie Papier, Gewebe aus zum Beispiel Baumwolle, Hanf, Jurte, Brennesselfasern oder Folien aus zum Beispiel Polymilchsäure, Cellulose, modifizierter Stärke, Polyhydroxyalkanoat, biobasiertem Polypropylen, biobasiertem Polyethylen verwendet. Diese Aufzählung ist nicht abschließend zu verstehen, sondern im Rahmen der Erfindung ist auch die Verwendung anderer Folien möglich.

Das Trägermaterial kann vorzugsweise ein- oder beidseitig mit der Haftlebemasse ausgerüstet sein. Das Haftklebeband wird dadurch gebildet, dass auf den Träger partiell oder vollflächig die Klebmasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Klebmassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebmasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Vorteilhaft ist die Verwendung eines Haftvermittlers, einer so genannten Primerschicht, zwischen Träger und Klebmasse oder einer physikalischen Vorbehandlung der Trägeroberfläche zur Verbesserung der Haftung der Klebmasse auf dem Träger. Als Primer sind die bekannten Dispersion- und Lösungsmittelsysteme verwendbar zum Beispiel auf Basis von Isopren- oder Butadien haltigen Kautschuk, Acrylatkautschuk,

Als Primer sind die bekannten Dispersion- und Lösungsmittelsysteme verwendbar zum Beispiel auf Basis von Isopren- oder Butadien haltigen Kautschuk, Acrylatkautschuk, Polyvinyl, Polyvinyliden und/oder Cyclokautschuk. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusions-Schicht auf der einen Trägerfolie aufgebracht werden. Als physikalische Oberflächenbehandlungen eigenen sich zum Beispiel Beflammung, Corona oder Plasma oder Coextrusionsschichten.

Des Weiteren kann das Trägermaterial rück- oder oberseitig, also der Klebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein. Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl. Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von $C_{14}$- bis $C_{28}$-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Weiter kann das Trägermaterial vor- beziehungsweise nachbehandelt werden. Gängige Vorbehandlungen sind Hydrophobieren, geläufige Nachbehandlungen sind Kalandern, Tempern, Kaschieren, Stanzen und Eindecken.

Das Haftklebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

Die Herstellung des erfindungsgemäßen Haftklebefilms kann durch übliche, dem Fachmann bekannte Beschichtungsverfahren erfolgen. Hierbei kann die Polyester-Haftklebmasse inklusive der Additive, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden. Alternativ kann die Beschichtung der Trägerfolie oder Trennfolie auch in einem lösemittelfreien Verfahren erfolgen. Hierzu wird der Copolyester in einem Extruder erwärmt und aufgeschmolzen. In dem Extruder können weitere Prozessschritte wie das Mischen mit den beschriebenen Additiven, Filtration oder eine Entgasung erfolgen. Die Schmelze wird dann mittels einer Breitschlitzdüse auf die Trägerfolie oder Trennfolie beschichtet.

Das erfindungsgemäße Haftklebeband hat vorzugsweise eine Klebkraft auf einem Stahluntergrund von mindestens 2,0 N/cm bei einem Masseauftrag von 30 g/m$^2$. Diese Werte werden auch nach einer Lagerung von 3 Monaten bei 23 °C, 40 °C oder 70 °C erreicht.

Selbstklebende Abdeckbänder, im Folgenden als Abdeckklebeband bezeichnet, müssen einige wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, die Beständigkeit gegenüber Farbdurchschlag, die Beständigkeit gegenüber Feuchtigkeit und eine dosierte Klebkraft auf der eigenen Rückseite.

Für Abdeckklebebänder werden üblicherweise als Trägermaterial maschinell gekreppte Papiere eingesetzt, die in der Regel aus 100 % Natronkraft-Zellstoff (NBSK) hergestellt werden. Im sogenannten Nasskrepp-Verfahren erfolgt die Kreppung meistens in der Papiermaschine mit Hilfe eines Kreppschabers auf einem sogenannten Kreppzylinder entweder innerhalb beziehungsweise am Ende der Pressenpartie oder auf einem der darauf folgenden Zylinder der Trockenpartie. Dabei wird durch Stauchung der noch feuchten und labilen Papierbahn an der Vorderkante des Kreppschabers eine Mikrofaltung des Papiers erzeugt. Dieser sehr sensible Verfahrensschritt begrenzt im Allgemeinen die maximal mögliche Geschwindigkeit der Papiermaschine und verkürzt die Länge der Papierbahn um ca. 10 bis 20 %. Die Falten werden beim anschließenden Trocknungsprozess im Wesentlichen durch Ausbildung von Wasserstoffbrückenbindungen fixiert, so dass sie bei mäßiger mechanischer Beanspruchung des Papiers in Längsrichtung - wie sie zum Beispiel beim Abrollen und Ablängen eines Abdeckklebebands auftritt - stabil bleiben. Die Stabilität kann durch Zugabe von Leimungsmitteln noch erhöht und so dem jeweiligen Anwendungszweck angepasst werden. Sie wird üblicherweise durch Messen des Kraft-Dehnungs-Diagramms bestimmt. Nach diesem Verfahren lassen sich sogenannte Flachkrepps mit Reißdehnungswerten in Längsrichtung von bis zu 20 % erzeugen. Die Dehnung in Querrichtung beträgt im Allgemeinen nicht mehr als ca. 5 %.

Ein weiteres Verfahren zur Herstellung von dehnbaren Papierträgern für Abdeckklebebänder ist das sogenannte CLUPAK-Verfahren. Dabei werden die Fasern im glatten Papier durch Friktion mit Hilfe eines sich entspannenden Gummituches oder gummibezogener Walzen in der Papierbahnebene gestaucht beziehungsweise gekräuselt. Man erhält so ein dehnfähiges Papier, dessen gekräuselte Fasern bei Zugbeanspruchung wieder gestreckt werden. Eine Mikrofaltung ist nicht erkennbar; das Papier erscheint glatt und ist deshalb nicht als Krepp-Papier im eigentlichen Sinne anzusehen. Charakteristisch für die nach diesem Verfahren hergestellten Papiere ist eine bereits bei geringen Dehnungen sehr hohe Zugkraft, die im Bereich der Reißdehnung nur noch geringfügig ansteigt. Üblicherweise werden deshalb für Abdeckklebebänder geleimte Clupak-Träger ohne Imprägnierung eingesetzt. Die erzielten Dehnungen in Längsrichtung liegen ebenfalls bei bis zu 20 %. Zu diesem Verfahren und dem daraus hergestellten Produkt sei auf die DE 38 35 507 A1 verwiesen.

Für die Erzielung sehr hoher Dehnwerte von bis zu etwa 50 % wird neben dem klassischen Nasskreppverfahren, das hierzu mit besonders groben Kreppschabern betrieben wird, auch das Trockenkreppverfahren angewendet. Dabei wird ein glattes Papier auf einer separaten Maschine nach Wiederanfeuchten mit einer Bindemittellösung

(Stärke, CMC, PVAl) gekreppt und anschließend erneut getrocknet. Nach beiden Verfahren erhält man sogenannte Hochkrepps, die sich neben der extremen Dehnfähigkeit durch eine große Dicke und eine sehr raue Oberfläche auszeichnen.

Eine weitere Alternative für einen gekreppten Träger ist in der DE103 16 995 A1 offenbart. Des Weiteren offenbaren die WO 2010/088322 A1 und DE 20 2010 005 924 U1 vorteilhafte geeignete Papierträger.

Bevorzugt wird das Klebeband mit einem der oben beschriebenen gekreppten Papierträger ausgerüstet und als Abdeckband, beispielsweise in Lackierprozessen eingesetzt. Besonders vorteilhaft kann das erfindungsgemäße Band von Profi- oder Hobbymalern im Außenbereich eingesetzt werden, zum Beispiel beim Fassadenanstrich, bei Tür- oder Fensterarbeiten sowie anderen hochwertigen Malerarbeiten.

Diese Lackierprozesse können dabei hochprofessionell in der Automobilindustrie stattfinden.

Das erfindungsgemäße Klebeband mit Papierträger ist sehr anschmiegsam, haftet trotz der biobasierten Rohstoffe, insbesondere der biobasierten Füllstoffe, hervorragend und ist auch rückstandsfrei wiederablösbar. Des Weiteren ist das Klebeband bis Temperaturen von bis zu 60 °C temperaturstabil gemessen nach der unten angegebenen Methode "Temperaturbeständigkeit von Klebebändern" auf lackierten Aluminiumtafeln (Schwarzlackbleche).

Insbesondere zeigt das Klebeband keine schlechteren Eigenschaften als ein vergleichbares Klebeband, dessen Naturkautschuk basierende Klebemasse mit den herkömmlichen, nicht biobasierten Klebharzen oder den herkömmlichen, nicht biobasierten Klebharzen oder Füllstoffen wie insbesondere Calciumcarbonat abgemischt ist, wie die Beispiele zeigen.

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen

Figur 1     ein einseitiges Haftklebeband,
Figur 2     ein beidseitiges Haftklebeband,
Figur 3     ein trägerfreies Haftklebeband (Transferklebeband).

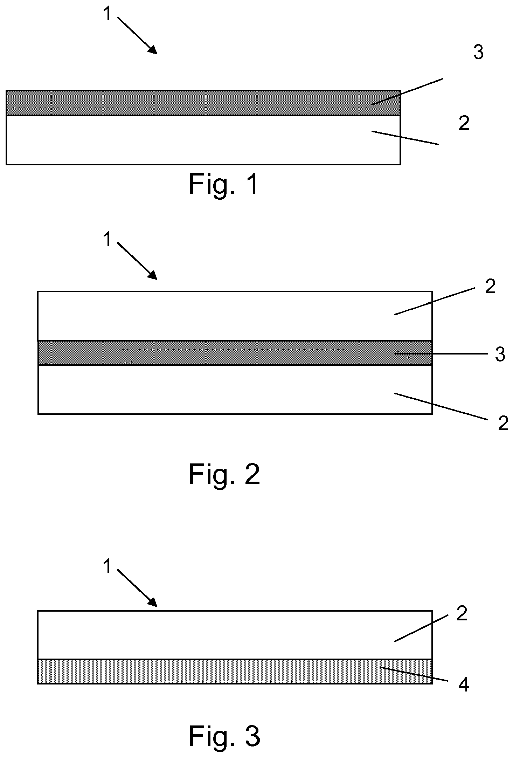

Figur 1 zeigt ein einseitig klebendes Haftklebeband 1. Das Haftklebeband 1 weist eine Klebeschicht 2 auf, die durch Beschichtung einer der zuvor beschriebenen Haftklebemassen auf einen Träger 3 hergestellt wurde. Der Haftklebemassenauftrag beträgt bevorzugt zwischen 10 und 50 $g/m^2$.

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Der in Figur 2 dargestellte Produktaufbau zeigt ein Haftklebeband 1 mit einem Träger 3, der beidseitig mit einer Haftklebemasse beschichtet ist und somit zwei Klebeschichten 2 aufweist. Der Haftklebemassenauftrag je Seite beträgt wiederum bevorzugt zwischen 10 und 200 $g/m^2$.

Auch bei dieser Ausgestaltung wird bevorzugt zumindest eine Klebeschicht 2 mit einer Trennfolie abgedeckt. Bei einem aufgerollten Klebeband kann diese eine Trennfolie gegebenenfalls auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere Haftklebemasse eingesetzt werden.

Der in Figur 3 dargestellte Produktaufbau zeigt ein Haftklebeband 1 in Form eines Transferklebebandes, das heißt, ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt hier üblicherweise zwischen 10 und 50 $g/m^2$. Gegebenenfalls wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

Prüfmethoden

Die Messungen werden, wenn nicht anders angegeben, bei einem Prüfklima von 23 $\pm$ 1 °C und 50 $\pm$ 5 % rel. Luftfeuchte durchgeführt.

Bestimmung des Anteils an nachwachsenden Rohstoffen

Der Anteil an nachwachsenden Rohstoffen wird gemäß der C14-Radiocarbonmethode ASTM D6866-04 bestimmt. Alternativ kann die Bestimmung auch rechnerisch auf Basis von Herstellerangeben der Rohstoffe erfolgen.

Klebkraft

Die Prüfung der Schälfestigkeit (Klebkraft) erfolgte in Anlehnung an PSTC-1.

Ein 2 cm breiter Streifen des Haftklebebandes wird auf dem Prüfuntergrund wie zum Beispiel einer Stahlplatte durch fünfmaliges doppeltes Überrollen mittels einer 4 kg Rolle verklebt. Die Platte wird eingespannt, und der Selbstklebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt. Der Wert wird als KKS angegeben (Klebkraft Stahl).

Zur Bestimmung der Klebkraft eines Klebebands auf der Rückseite desselben (KKRS, Klebkraft Rückseite) wird ein Prüfstreifen, ohne an seiner Rückseite berührt zu werden, auf den Prüfuntergrund wie zum Beispiel einer Stahlplatte aufgelegt. Ein zweiter Prüfstreifen wird sodann deckungsgleich auf die Rückseite des ersteren unter Vermeidung von Lufteinschlüssen aufgebracht durch fünfmaliges doppeltes Überrollen mittels einer 4 kg Rolle verklebt.

Bei der Messung wird der obere Prüfstreifen vom darunter liegenden unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt.

Rolling Ball Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:

- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1 °C, 50 ± 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

Glührückstand

Die Bestimmung des Glührückstands dient zur Erfassung des Aschegehaltes einer Substanz, das heißt des prozentualen, bei 800 °C nicht brennbaren anorganischen Anteils (Glasfasern, Glaskugeln, Zinkoxid, Titanoxid, Kaolin usw.), bezogen auf die Substanz.
Der Aschegehalt in Prozent wird durch Differenzwägung mit einer Analysenwaage (Ablesegenauigkeit 0,1 mg) ermittelt. Hierzu wird zunächst ein Mikrowellenofen in einer Stunde und 10 min auf 800 °C aufgeheizt und für zehn Stunden bei 800 °C gehalten. Anschließend werden mit der Substanz gefüllte Quarzfasertiegel (50 ml, Ø 45 mm, Höhe 30 mm) in den Ofen verbracht und für 25 Minuten verascht und geglüht.
Der Aschegehalt in % bezogen auf die Substanz wird berechnet wie folgt.

$$\text{Asche} = \frac{\text{Auswaage x 100}}{\text{Einwaage}}$$

Es werden mindestens zwei Bestimmungen ausgeführt und aus den Ergebnissen das arithmetische Mittel errechnet.

Trockenverlust

Die Bestimmung des Trockenverlusts erfolgt ähnlich wie die des Glührückstands. Hierzu wird zunächst ein Mikrowellenofen in einer Stunde auf 100 °C aufgeheizt und für zwei Stunden bei 100 °C gehalten. Anschließend werden mit der Substanz gefüllte Quarzfasertiegel (50 ml, Ø 45 mm, Höhe 30 mm) in den Ofen verbracht und für drei Stunden bei 100 °C geglüht.
Der Trockenverlust wird durch Differenzwägung mit einer Analysenwaage (Ablesegenauigkeit 0,1 mg) ermittelt. Der Trockenverlust in Gew.-% bezogen auf die Substanz wird berechnet.

$$\text{Trockenverlust} = \frac{\text{Auswaage x 100}}{\text{Einwaage}}$$

Es werden mindestens zwei Bestimmungen ausgeführt und aus den Ergebnissen das arithmetische Mittel errechnet.

Temperaturbeständigkeit von Klebebändern

Diese Prüfung dient zur Festlegung der Temperaturbeständigkeit von Klebebändern. Es wird auf Rückstände geprüft, die gegebenenfalls nach Temperaturbelastung und anschließendem Demaskieren auf dem Untergrund verbleiben.

Zwei Streifen des zu prüfenden Musters werden auf den vorgegeben Untergrund geklebt und der vorgegebenen Temperaturbeanspruchung unterzogen.

Anschließend wird ein Teststreifen nach Temperierung warm je zur Hälfte im 90°- und 180°-Winkel abgezogen, der zweite genauso bei Raumtemperatur.

Nach dem Abziehen wird der Untergrund auf Rückstände geprüft. Die Beurteilung der drei Prüfkriterien Beläge, Masserückstände in der Fläche, Masserückstände an der Kante erfolgt nach Notenskalen.

Hierzu werden typischerweise lackierte Aluminiumtafeln (Schwarzlackbleche) eingesetzt. Prinzipiell können jedoch auch andere Untergründe, zum Beispiel mit Lacken versehene Bleche oder Kunststoffe verwendet werden.

Die zu prüfenden Muster und die Testuntergründe müssen vor der Durchführung mindestens über Nacht im Klimaraum konditionieren. Prüfmuster mit einer Breite größer 50 mm werden mit dem Stahllineal und Cutter auf 20 mm Breite geschnitten.

Die für die Prüfung eingesetzten Haftgründe müssen sauber sein, unlackierte Flächen werden vor der Prüfung mit geeigneten Lösemitteln gereinigt. Schwarzlackbleche werden dabei mit Benzin abgewischt Kunststoffuntergründe mit Ethanol. Nach der Reinigung muss der Untergrund mindestens zehn Minuten ablüften.

Nun werden mindestens zwei Streifen des zu prüfenden Musters aufgeklebt und mittels Kunststoffrakel gut angedrückt.

Die Streifenlänge sollte nicht weniger als 25 cm betragen. Die Prüflinge werden nun der vorgegebenen Temperaturbeanspruchung ausgesetzt. Typische Dauer ist eine Stunde. Nach der Lagerung wird geprüft, ob Ablöseerscheinungen, Schrumpf oder ähnliche Störungen aufgetreten sind.

Für das Abziehen im "warmen" Zustand werden die Untergründe, bevorzugt Bleche für zehn Minuten in einem Umluftofen temperiert bei 60 °C.

Anschließend wird jeweils ein Streifen eines Musters im Temperier-Ofen abgezogen, was das Warm-Demaskieren ist.

Das Abziehen der Streifen erfolgt jeweils zur Hälfte im Winkel von 90° und 180° zügig von Hand (v= 6 m/min).

Nach 15-minütigem Abkühlen bei Raumtemperatur erfolgt das Abziehen des zweiten Streifens der Muster in der gleichen Weise, was das Kalt-Demaskieren ist.

Nach dem Abziehen der einzelnen Teststreifen wird der Untergrund auf Beläge und Masserückstände geprüft (siehe Notenskalen).

Kommt es während des Abziehens zu Reißern, so wird dies mittels einer Notenskala als Zusatzinformation mit dem Ergebnis angegeben.

Die drei Prüfparameter und die gegebenenfalls aufgetretenen Reißer werden für jede der vier Demaskier-Bedingungen nach folgenden Notenskalen beurteilt.

**Beläge**

| | |
|---|---|
| keine Beläge | B0 |
| sehr schwach sichtbare Beläge | B1 |
| schwach sichtbare Beläge | B2 |
| mäßig sichtbare Beläge | B3 |
| stark sichtbare Beläge | B4 |
| sehr stark sichtbare Beläge | B5 |

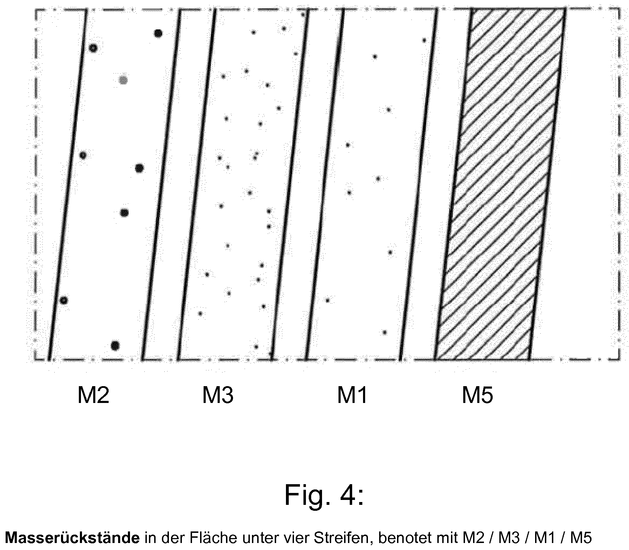

**Masserückstände in der Fläche (siehe Figur 4)**

| | |
|---|---|
| keine Masserückstände | M0 |

(fortgesetzt)

| | |
|---|---|
| minimale MR (einzelne kleine Punkte) | M1 |
| geringe MR (einzelne größere Punkte) | M2 |
| mäßige MR (viele kleine Punkte) | M3 |
| starke MR (viele große Punkte) | M4 |
| sehr starke MR (flächige Rückstände) | M5 |

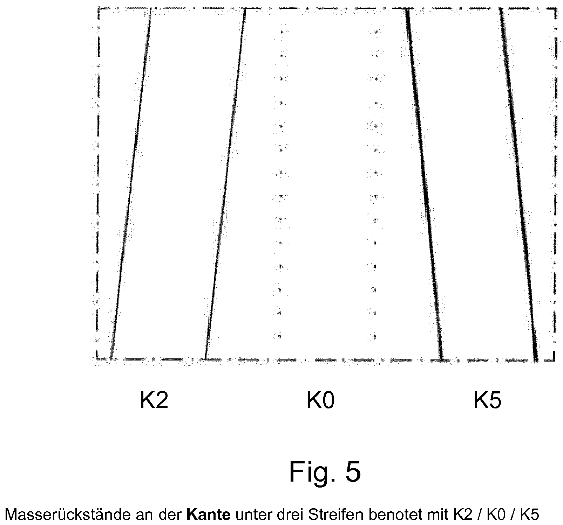

**Kante (siehe Figur 5)**

| | |
|---|---|
| keine Kante | K0 |
| sehr schwach sichtbare Kante | K1 |
| schwach sichtbare Kante | K2 |
| mäßig sichtbare Kante | K3 |
| stark sichtbare Kante | K4 |
| sehr stark sichtbare Kante | K5 |

**Reißer**

| | |
|---|---|
| keine Reißer | R0 |
| Reißerneigung bei Abzugswinkel 180° | R1 |
| Reißer bei 180°, bei 90 ° i.O. | R2 |
| Reißerneigung bei 90° | R3 |
| Reißer bei 90° | R4 |
| permanentes Reißen | R5 |

Für jede der vier Demaskier-Bedingungen werden - wenn möglich - die Noten für Beläge **B** und Masserückstände in der Fläche **M** und an der Kante **K** angegeben.

Mit dem Ergebnis werden als Zusatzinformation gegebenenfalls auch die Noten für Reißer **R** und eventuelle Störungen wie zum Beispiel Ablösen oder Schrumpf des Klebebands angegeben.

Außerdem werden die Höhe und Dauer der Temperaturbelastung und der verwendete Untergrund angegeben.

Im Folgenden soll die Erfindung anhand mehrerer Beispiele näher erläutert werden, ohne damit die Erfindung unnötig einschränken zu wollen.

**Beispiele**

**Beispiel 1**

| | Ansatzgröße [g] | 200 | |
|---|---|---|---|
| | Feststoffgehalt Masse [Gew.-%] | 30 | |

| Rohstoff | Festeinwaage [Gew.-%] | Festeinwaage [g] | FG [%] | Nasseinwaage [g] |
|---|---|---|---|---|
| Kautschuk Natur V145 | 41,90 | 83,80 | 100,00 | 83,80 |
| Naturharz | 41,40 | 82,80 | 100,00 | 82,80 |
| JELUCEL HM 30 | 12,70 | 25,40 | 100,00 | 25,40 |

(fortgesetzt)

| Rohstoff | Festeinwaage [Gew.-%] | Festeinwaage [g] | FG [%] | Nasseinwaage [g] |
|---|---|---|---|---|
| NR-Powder-Premix 3 | 4,00 | 8,00 | 100,00 | 8,00 |
| Summe | 100,00 | 200,00 | | 200,00 |
| Lösungsmittel | | | | |
| Benzin | | | | 466,67 |
| | | Gesamtmasse | | 666,67 |
| | | | | |
| Vorgehen Vorbereitung: | | | | |
| 1/3 der Benzinmenge zum Vorquellen im Kneter vorlegen | | | | |
| 100% der Menge Kautschuk vorlegen | | | | |
| 100% der Menge Füllstoff vorlegen | | | | |
| 100% der Menge Premix vorlegen | | | | |
| Vom Einwiegetag bis zum nächsten Morgen stehen (quellen) lassen. | | | | |
| Vorgehen Kneten: | | | | |
| Vorbereiteten Inhalt Kneter einschalten und 5 Minuten kneten | | | | |
| Das abgewogene und gemörserte Harz in 4 Portionen zugeben (innerhalb 1 h) | | | | |
| Innerhalb 1h die restlichen 2/3 -Lösemittelmenge in Portionen zugeben und kneten. | | | | |
| 15 min kneten lassen. | | | | |
| Gesamtlaufzeit ca. 2,25 h | | | | |

Als Naturharz wurde ein Terpenharz auf $\alpha$-Pinen-Basis genommen (Dercolyte A 115). Der Powder Premix 3 besteht zu 50 Gew.-% aus Kreide, zu 25 Gew.-% aus $TiO_2$ und zu 25 Gew.-% aus Alterungsschutzmitteln.

**Beispiel 2**

| | | | | |
|---|---|---|---|---|
| | Ansatzgröße [g] | 200 | | |
| | Feststoffgehalt Masse [Gew.-%] | 30 | | |

| Rohstoff | Festeinwaage [Gew.-%] | Festeinwaage [g] | FG [%] | Nasseinwaage [g] |
|---|---|---|---|---|
| Kautschuk Natur V145 | 41,90 | 83,80 | 100,00 | 83,80 |
| Naturharz | 41,40 | 82,80 | 100,00 | 82,80 |
| JELUCEL HM 30 | 12,70 | 25,40 | 100,00 | 25,40 |
| NR-Powder-Premix 3 | 4,00 | 8,00 | 100,00 | 8,00 |
| Summe | 100,00 | 200,00 | | 200,00 |
| Lösungsmittel | | | | |
| Benzin | | | | 466,67 |
| | | Gesamtmasse | | 666,67 |
| | | | | |
| Vorgehen Vorbereitung: | | | | |
| 1/3 der Benzinmenge zum Vorquellen im Kneter vorlegen | | | | |
| 100% der Menge Kautschuk vorlegen | | | | |

(fortgesetzt)

| Rohstoff | Festeinwaage [Gew.-%] | Festeinwaage [g] | FG [%] | Nasseinwaage [g] |
|---|---|---|---|---|
| 100% der Menge Füllstoff vorlegen | | | | |
| 100% der Menge Premix vorlegen | | | | |
| Vom Einwiegetag bis zum nächsten Morgen stehen (quellen) lassen. | | | | |
| Vorgehen Kneten: | | | | |
| Vorbereiteten Inhalt Kneter einschalten und 5 Minuten kneten | | | | |
| Das abgewogene und gemörserte Harz in 4 Portionen zugeben (innerhalb 1 h) | | | | |
| Innerhalb 1h die restlichen 2/3 -Lösemittelmenge in Portionen zugeben und kneten. | | | | |
| 15 min kneten lassen. | | | | |
| Gesamtlaufzeit ca. 2,25 h | | | | |

Als Naturharz wurde ein Terpenharz auf ß-Pinen-Basis genommen (Dercolyte S 115).

**Beispiel 3**

| | Ansatzgröße [g] | 200 | |
|---|---|---|---|
| | Feststoffgehalt Masse [Gew.-%] | 30 | |

| Rohstoff | Festeinwaage [Gew.-%] | Festeinwaage [g] | FG [%] | Nasseinwaage [g] |
|---|---|---|---|---|
| Kautschuk Natur V145 | 41,90 | 83,80 | 100,00 | 83,80 |
| Naturharz | 41,40 | 82,80 | 100,00 | 82,80 |
| JELUCEL HM 30 | 14,70 | 29,40 | 100,00 | 29,40 |
| NR-Premix 4 | 2,00 | 4,00 | 100,00 | 4,00 |
| Summe | 100,00 | 200,00 | | 200,00 |
| Lösungsmittel | | | | |
| Benzin | | | | 466,67 |
| | | Gesamtmasse | | 666,67 |
| | | | | |
| Vorgehen Vorbereitung: | | | | |
| 1/3 der Benzinmenge zum Vorquellen im Kneter vorlegen | | | | |
| 100% der Menge Kautschuk vorlegen | | | | |
| 100% der Menge Füllstoff vorlegen | | | | |
| 100% der Menge Premix vorlegen | | | | |
| Vom Einwiegetag bis zum nächsten Morgen stehen (quellen) lassen. | | | | |
| Vorgehen Kneten: | | | | |
| Vorbereiteten Inhalt Kneter einschalten und 5 Minuten kneten | | | | |
| Das abgewogene und gemörserte Harz in 4 Portionen zugeben (innerhalb 1 h) | | | | |
| Innerhalb 1h die restlichen 2/3 -Lösemittelmenge in Portionen zugeben und kneten. | | | | |
| 15 min kneten lassen. | | | | |
| Gesamtlaufzeit ca. 2,25 h | | | | |

Als Naturharz wurde ein Terpenharz auf $\alpha$-Pinen-Basis genommen (Dercolyte A 115). Der Premix 4 besteht zu 50 Gew.-% aus $TiO_2$, zu 12,5 Gew.-% aus 2-Mercaptobenzimidazole (der Firma. Lanxess) und zu 37,5 Gew.-% aus Alterungsschutzmitteln.

**Beispiel 4**

| Ansatzgröße [g] | 200 |
|---|---|
| Feststoffgehalt Masse [Gew.-%] | 30 |

| Rohstoff | Festeinwaage [Gew.-%] | Festeinwaage [g] | FG [%] | Nasseinwaage [g] |
|---|---|---|---|---|
| Kautschuk Natur V145 | 41,90 | 83,80 | 100,00 | 83,80 |
| Naturharz | 41,40 | 82,80 | 100,00 | 82,80 |
| JELUCEL HM 90 | 14,70 | 29,40 | 100,00 | 29,40 |
| NR-Powder-Premix 3 | 2,00 | 4,00 | 100,00 | 4,00 |
| Summe | 100,00 | 200,00 | | 200,00 |
| Lösungsmittel | | | | |
| Benzin | | | | 466,67 |
| | | Gesamtmasse | | 666,67 |

| Vorgehen Vorbereitung: |
|---|
| 1/3 der Benzinmenge zum Vorquellen im Kneter vorlegen |
| 100% der Menge Kautschuk vorlegen |
| 100% der Menge Füllstoff vorlegen |
| 100% der Menge Premix vorlegen |
| Vom Einwiegetag bis zum nächsten Morgen stehen (quellen) lassen. |
| Vorgehen Kneten: |
| Vorbereiteten Inhalt Kneter einschalten und 5 Minuten kneten |
| Das abgewogene und gemörserte Harz in 4 Portionen zugeben (innerhalb 1 h) |
| Innerhalb 1h die restlichen 2/3 -Lösemittelmenge in Portionen zugeben und kneten. |
| 15 min kneten lassen. |
| Gesamtlaufzeit ca. 2,25 h |

Als Naturharz wurde ein Terpenharz auf ß-Pinen-Basis genommen (Dercolyte S 115).

**Beispiel 5**

| Ansatzgröße [g] | 200 |
|---|---|
| Feststoffgehalt Masse [Gew.-%] | 30 |

| Rohstoff | Festeinwaage [Gew.-%] | Festeinwaage [g] | FG [%] | Nasseinwaage [g] |
|---|---|---|---|---|
| Kautschuk Natur V145 | 44,76 | | 100,00 | |
| Naturharz | 37,39 | | 100,00 | |
| JELUCEL HM 30 | 15,71 | | 100,00 | |
| NR-Premix 4 | 2,14 | | 100,00 | |

(fortgesetzt)

| Rohstoff | Festeinwaage [Gew.-%] | Festeinwaage [g] | FG [%] | Nasseinwaage [g] |
|---|---|---|---|---|
| Summe | 100,00 | 200,00 | | 200,00 |
| Lösungsmittel | | | | |
| Benzin | | | | 466,67 |
| | | Gesamtmasse | | 666,67 |
| | | | | |
| Vorgehen Vorbereitung: | | | | |
| 1/3 der Benzinmenge zum Vorquellen im Kneter vorlegen | | | | |
| 100% der Menge Kautschuk vorlegen | | | | |
| 100% der Menge Füllstoff vorlegen | | | | |
| 100% der Menge Premix vorlegen | | | | |
| Vom Einwiegetag bis zum nächsten Morgen stehen (quellen) lassen. | | | | |
| Vorgehen Kneten: | | | | |
| Vorbereiteten Inhalt Kneter einschalten und 5 Minuten kneten | | | | |
| Das abgewogene und gemörserte Harz in 4 Portionen zugeben (innerhalb 1 h) | | | | |
| Innerhalb 1h die restlichen 2/3 -Lösemittelmenge in Portionen zugeben und kneten. | | | | |
| 15 min kneten lassen. | | | | |
| Gesamtlaufzeit ca. 2,25 h | | | | |

Als Naturharz wurde ein Terpenharz auf $\alpha$-Pinen-Basis genommen (Dercolyte A 115). Der Premix 4 besteht zu 50 Gew.-% aus $TiO_2$, zu 12,5 Gew.-% aus 2-Mercaptobenzimidazole (der Firma. Lanxess) und zu 37,5 Gew.-% aus Alterungsschutzmitteln.

**Beispiel 6**

| | Ansatzgröße [g] | 200 | |
|---|---|---|---|
| | Feststoffgehalt Masse [Gew.-%] | 30 | |

| Rohstoff | Festeinwaage [Gew.-%] | Festeinwaage [g] | FG [%] | Nasseinwaage [g] |
|---|---|---|---|---|
| Kautschuk Natur V145 | 38,26 | | 100,00 | |
| Naturharz | 43,99 | | 100,00 | |
| JELUCEL HM 30 | 15,62 | | 100,00 | |
| NR-Powder-Premix 3 | 2,13 | | 100,00 | |
| Summe | 100,00 | 200,00 | | 200,00 |
| Lösungsmittel | | | | |
| Benzin | | | | 466,67 |
| | | Gesamtmasse | | 666,67 |
| | | | | |
| Vorgehen Vorbereitung: | | | | |
| 1/3 der Benzinmenge zum Vorquellen im Kneter vorlegen | | | | |
| 100% der Menge Kautschuk vorlegen | | | | |

(fortgesetzt)

| Rohstoff | Festeinwaage [Gew.-%] | Festeinwaage [g] | FG [%] | Nasseinwaage [g] |
|---|---|---|---|---|
| 100% der Menge Füllstoff vorlegen | | | | |
| 100% der Menge Premix vorlegen | | | | |
| Vom Einwiegetag bis zum nächsten Morgen stehen (quellen) lassen. | | | | |
| Vorgehen Kneten: | | | | |
| Vorbereiteten Inhalt Kneter einschalten und 5 Minuten kneten | | | | |
| Das abgewogene und gemörserte Harz in 4 Portionen zugeben (innerhalb 1 h) | | | | |
| Innerhalb 1h die restlichen 2/3 -Lösemittelmenge in Portionen zugeben und kneten. | | | | |
| 15 min kneten lassen. | | | | |
| Gesamtlaufzeit ca. 2,25 h | | | | |

Als Naturharz wurde ein Terpenharz auf $\alpha$-Pinen-Basis genommen (Dercolyte A 115).

**Vergleichsbeispiel**

| | Ansatzgröße [g] | 200 | |
|---|---|---|---|
| | Feststoffgehalt Masse [Gew.-%] | 30 | |

| Rohstoff | Festeinwaage [Gew.-%] | Festeinwaage [g] | FG [%] | Nasseinwaage [g] |
|---|---|---|---|---|
| Kautschuk Natur V145 | 41,90 | 83,80 | 100,00 | 83,80 |
| Harz | 41,40 | 82,80 | 100,00 | 82,80 |
| Kreide | 12,70 | 25,40 | 100,00 | 25,40 |
| NR-Powder-Premix 3 | 4,00 | 8,00 | 100,00 | 8,00 |
| Summe | 100,00 | 200,00 | | 200,00 |
| Lösungsmittel | | | | |
| Benzin | | | | 466,67 |
| | | Gesamtmasse | | 666,67 |
| | | | | |
| Vorgehen Vorbereitung: | | | | |
| 1/3 der Benzinmenge zum Vorquellen im Kneter vorlegen | | | | |
| 100% der Menge Kautschuk vorlegen | | | | |
| 100% der Menge Füllstoff vorlegen | | | | |
| 100% der Menge Premix vorlegen | | | | |
| Vom Einwiegetag bis zum nächsten Morgen stehen (quellen) lassen. | | | | |
| Vorgehen Kneten: | | | | |
| Vorbereiteten Inhalt Kneter einschalten und 5 Minuten kneten | | | | |
| Das abgewogene und gemörserte Harz in 4 Portionen zugeben (innerhalb 1 h) | | | | |
| Innerhalb 1h die restlichen 2/3 -Lösemittelmenge in Portionen zugeben und kneten. | | | | |
| 15 min kneten lassen. | | | | |
| Gesamtlaufzeit ca. 2,25 h | | | | |

Als Harz wurde ein Piccotac 1100E (Aliphatisches $C_5$-Kohlenwasserstoffharz) genommen.

**Ergebnisse**

Die nach dem beschriebenen Verfahren hergestellten Klebemassen wurden auf ein Krepppapierträger mit 64 g/m$^2$ Trägergewicht (40 g Papier mit einer 16 g Imprägnierung, 6 g Lack auf der Oberseite sowie 2 g Haftvermittler auf der Unterseite; jeweils bezogen auf einen Quadratmeter)) mit 40 g/m$^2$ ausgestrichen.

|  |  | Verglsbsp. | Beisp.1 | Beisp. 2 |
|---|---|---|---|---|
|  |  | Standard |  |  |
| KKS | [N/cm] | 2,71 | 2,67 | 3,43 |
| KKRS | [N/cm] | 1,24 | 1,00 | 0,98 |
| Temp.best.keit (1h @60°C) | | w: B1 k: B3, M1 K1 | w: i.O. k: M1 | w: B2, K1, M1 k: B2, K1, M2, R2 |
| Rolling Ball Tack (mm) | | 100 | 59,4 | > 250 |

|  |  | Verglsbsp. | Beisp.3 | Beisp. 4 |
|---|---|---|---|---|
|  |  | Standard |  |  |
| KKS | [N/cm] | 2,71 | 2,13 | 2,41 |
| KKRS | [N/cm] | 1,24 | 0,80 | 0,81 |
| Temp.best.keit (1h @60°C) | | w: B1 k: B3, M1 K1 | w: i.O. k: B1, K1 M2 | w: K1, M1 k: K1, M1 |
| Rolling Ball Tack (mm) | | 100 | 49,8 | 29 |

|  |  | Verglsbsp. | Beisp.5 | Beisp. 6 |
|---|---|---|---|---|
|  |  | Standard |  |  |
| KKS | [N/cm] | 2,71 | 1,32 | 2,47 |
| KKRS | [N/cm] | 1,24 | 0,50 | 0,75 |
| Temp.best.keit (1h @60°C) | | w: B1 k: B3, M1 K1 | w: i.O. k: B2, K1 M1 | w: B1, M1 k: B2, M3 |
| Rolling Ball Tack (mm) | | 100 | 55,6 | > 167,4 |

Die Temperaturbeständigkeit wurde auf klarlacklackierten Blechen in einem Ofen bei 60 °C für eine Stunde ermittelt.
Die Abkürzungen bedeuten:

w    warm abgezogen

k    kalt abgezogen

B    Belag

K    Kantenbildung

M    optischer Masserückstand.


Noten siehe oben


**Patentansprüche**

1. Verwendung einer Klebemasse in einem ein- oder beidseitig klebenden Klebeband, wobei der Masseauftrag (Beschichtungsstärke) der Klebemasse zwischen 10 und 50 g/m$^2$ liegt, wobei die Haftklebemasse, die zu mindestens 95 Gew.-%, vorzugsweise 98 Gew.-% biobasiert ist, als Basispolymer Naturkautschuk sowie Klebharze aus biobasierten Rohstoffen enthält, wobei der Anteil der Klebharze bei 80 bis 120 phr liegt, sowie zumindest einen biobasierten in dem Basispolymer oder den Klebharzen unlöslichen und nicht mit dem Basispolymer oder den Klebharzen vernetzenden mikropartikulären Zusatzstoff in Form von Partikeln, der ein Schüttgewicht von mindestens 200 g/l hat und bei dem mindestens 65 % der Partikel einen Partikeldurchmesser von weniger als 32 $\mu$m aufweisen, wobei der Anteil des Zusatzstoffs bezogen auf die gesamte Haftklebemasse zwischen größer 0 Gew.-% und bis zu 20 Gew.-% liegt, wobei als Zusatzstoff pflanzliche und/oder tierische Rohstoffe eingesetzt werden.

2. Verwendung nach Anspruch 1,
   **dadurch gekennzeichnet, dass**
   die Haftklebemasse zu mindestens 98 Gew.-% biobasiert ist.

3. Verwendung nach Anspruch 1 oder 2,
   **dadurch gekennzeichnet, dass**
   das Basispolymer nur aus Naturkautschuk besteht, weiter vorzugsweise dass neben Naturkautschuk kein weiteres Polymer in der Haftklebemasse vorhanden ist.

4. Verwendung nach zumindest einem der Ansprüche 1 bis 3,
   **dadurch gekennzeichnet, dass**
   die Klebharze Polyterpenharze auf Basis von $\alpha$-Pinen und/oder $\beta$-Pinen und/oder $\delta$-Limonen oder Terpenphenolharze sind.

5. Verwendung nach zumindest einem der vorherigen Ansprüche,
   **dadurch gekennzeichnet, dass**
   der Anteil der Klebharze bei 90 bis 100 phr liegt.

6. Verwendung nach zumindest einem der vorherigen Ansprüche,
   **dadurch gekennzeichnet, dass**
   der Anteil der organischen Füllstoffe in der Haftklebemasse zwischen 5 und 20 Gew.-% beträgt, insbesondere zwischen 10 und 20 Gew.-%, ganz besonders zwischen 12 und 16 Gew.-%.

7. Verwendung nach zumindest einem der vorherigen Ansprüche,
   **dadurch gekennzeichnet, dass**
   als biobasierte oder organische Füllstoffe Cellulosepulver eingesetzt werden.

8. Verwendung nach zumindest einem der vorherigen Ansprüche,
   **dadurch gekennzeichnet, dass**
   die Haftklebemasse aus einer Zusammensetzung nur aus Naturkautschuk, Klebharz(en), Alterungsschutzmittel(n) und Zusatzstoff besteht.

9. Verwendung nach Anspruch 8,
   **dadurch gekennzeichnet, dass**
   das Klebeband als Abdeckklebeband zur vorübergehenden Abdeckung eines Untergrunds eingesetzt wird.

**Claims**

1. Use of an adhesive in a single- or double-sided adhesive tape, the coatweight (coating thickness) of the adhesive being between 10 and 50 g/m$^2$, the pressure sensitive adhesive which is at least 95 wt%, preferably 98 wt%, biobased comprising as its base polymer natural rubber and also tackifier resins composed of biobased raw materials, the fraction of the tackifier resins being 80 to 120 phr, and also at least one biobased microparticulate adjuvant which is insoluble in the base polymer or the tackifier resins and is noncrosslinking with the base polymer or the tackifier resins and which is in the form of particles and has a bulk density of at least 200 g/l, and in which at least 65% of the particles have a particle diameter of less than 32 μm, the fraction of the adjuvant relative to the overall pressure sensitive adhesive being between greater than 0 wt% and up to 20 wt%, the adjuvant used being plant and/or animal raw materials.

2. Use according to Claim 1,
   **characterized in that**
   the pressure sensitive adhesive is at least 98 wt% biobased.

3. Use according to Claim 1 or 2,
   **characterized in that**
   the base polymer consists only of natural rubber, more preferably **in that** besides natural rubber there is no further polymer present in the pressure sensitive adhesive.

4. Use according to at least one of Claims 1 to 3,
   **characterized in that**
   the tackifier resins are polyterpene resins based on α-pinene and/or β-pinene and/or δ-limonene or are terpene phenolic resins.

5. Use according to at least one of the preceding claims,
   **characterized in that**
   the fraction of the tackifier resins is 90 to 100 phr.

6. Use according to at least one of the preceding claims,
   **characterized in that**
   the fraction of the organic fillers in the pressure sensitive adhesive is between 5 and 20 wt%, more particularly between 10 and 20 wt%, very particularly between 12 and 16 wt%.

7. Use according to at least one of the preceding claims,
   **characterized in that**
   biobased or organic fillers used are cellulose powders.

8. Use according to at least one of the preceding claims,
   **characterized in that**
   the pressure sensitive adhesive consists of a composition composed only of natural rubber, tackifier resin(s), aging inhibitor(s), and adjuvant.

9. Use according to Claim 8,
   **characterized in that**
   the adhesive tape is used as adhesive masking tape for the temporary covering of a substrate.


**Revendications**

1. Utilisation d'une masse adhésive dans un ruban adhésif monoface ou double face, la masse appliquée (épaisseur de revêtement) de la masse adhésive étant de 10 à 50 g/m$^2$, la masse autoadhésive, qui est à raison d'au moins 95% en poids, de préférence de 98% en poids, à base biologique, contenant comme polymère de base du caoutchouc naturel ainsi que des résines adhésives en matières premières à base biologique, la proportion des résines adhésives étant de 80 à 120 parties par 100 parties, ainsi qu'au moins un additif microparticulaire sous forme de particules, à base biologique, insoluble dans le polymère de base ou dans les résines adhésives et ne réticulant pas avec le polymère de base ou les résines adhésives, qui présente une densité apparente d'au moins 200 g/l et dans lequel au moins 65% des particules présentent un diamètre de particule inférieur à 32 $\mu$m, la proportion de l'additif par rapport à la masse autoadhésive totale étant située entre plus de 0% en poids et jusqu'à 20% en poids, des matières premières végétales et/ou animales étant utilisées comme additifs.

2. Utilisation selon la revendication 1, **caractérisée en ce que** la masse autoadhésive est à base biologique à raison d'au moins 98% en poids.

3. Utilisation selon la revendication 1 ou 2, **caractérisée en ce que** le polymère de base est uniquement constitué par du caoutchouc naturel, plus préférablement, outre le caoutchouc naturel, aucun autre polymère n'est présent dans la masse autoadhésive.

4. Utilisation selon au moins l'une quelconque des revendications 1 à 3, **caractérisée en ce que** les résines adhésives sont des résines polyterpéniques à base d'$\alpha$-pinène et/ou de ß-pinène et/ou de $\delta$-limonene ou des résines de terpènephénol.

5. Utilisation selon au moins l'une quelconque des revendications précédentes, **caractérisée en ce que** la proportion de résines adhésives est de 90 à 100 parties par 100 parties.

6. Utilisation selon au moins l'une quelconque des revendications précédentes, **caractérisée en ce que** la proportion de charges organiques dans la masse autoadhésive est située entre 5 et 20% en poids, en particulier entre 10 et 20% en poids, tout particulièrement entre 12 et 16% en poids.

7. Utilisation selon au moins l'une quelconque des revendications précédentes, **caractérisée en ce qu'**on utilise de la poudre de cellulose comme charges organiques ou à base biologique.

8. Utilisation selon au moins l'une quelconque des revendications précédentes, **caractérisée en ce que** la masse autoadhésive est constituée par une composition constituée uniquement de caoutchouc naturel, de résine(s) adhésive(s), d'agent(s) de protection contre le vieillissement et d'additif.

9. Utilisation selon la revendication 8, **caractérisée en ce que** le ruban adhésif est utilisé comme ruban adhésif de protection pour la protection temporaire d'un substrat.

1

3

2

Fig. 1

1

2

3

2

Fig. 2

1

2

4

Fig. 3

M2          M3          M1          M5

# Fig. 4:

**Masserückstände** in der Fläche unter vier Streifen, benotet mit M2 / M3 / M1 / M5

K2                    K0                    K5

# Fig. 5

Masserückstände an der **Kante** unter drei Streifen benotet mit K2 / K0 / K5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2845541 A
- DE 3835507 A1
- DE 10316995 A1
- WO 2010088322 A1
- DE 202010005924 U1